# EUROPEAN PATENT APPLICATION

(11) **EP 4 787 341 A1**
(43) Date of publication of application: **05.08.2026**
(21) Application number: 25155230.3
(22) Date of filing: 31.01.2025
(51) Int. Cl.: G06V 20/52, G06V 40/10, G06V 40/20, G08B 21/04

(54) **METHOD AND SYSTEM FOR ANONYMISED INFERENCE OF INDIVIDUALS THROUGH JOURNEY DETECTION IN A SHARED ENVIRONMENT**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method of inferring individual journeys in a shared environment, the method comprising the steps of collecting data from at least one sensor positioned in each of a plurality of zones within the shared environment, wherein the data indicates movement or presence of an individual within each zone, determining connections between zones by analysing activations of the at least one sensor positioned in each of the plurality of zones, identifying zones that are directly accessible from one another based on the determined connections; combining the identified connections to determine one or more possible routes through the shared environment, analysing a sequence of sensor activation data indicating movement or presence of an individual within the zones to detect at least one completed journey taken by the individual through the shared environment, and attributing the at least one detected completed journey to the individual. The system comprising at least one sensor positioned in each of a plurality of zones within a shared environment, the sensor configured to collect data indicating movement or presence of an individual within each zone, a data storage module configured to store the collected sensor data, a processor configured to analyse activations of the at least one sensor positioned in each of the plurality of zones to determine connections between zones, identify zones that are directly accessible from one another based on the determined connections, combine the identified connections to determine one or more possible routes through the shared environment, detect at least one completed journey taken by the individual through the shared environment by analysing a sequence of sensor activation data, and attribute the at least one detected completed journey to the individual.

## Description

### FIELD

The present invention relates to a method and system for the detection and monitoring of individuals in shared environments, and more particularly but not exclusively to a method and system for anonymised inference of individuals through journey detection using non-intrusive sensors and data analysis techniques.

### BACKGROUND

The monitoring of individuals in multi-occupancy environments is an important technological area due to its wide-ranging applications in improving safety, enhancing quality of life, and enabling personalised assistance. For example, in residential homes, such monitoring can assist in identifying emergencies, such as falls, or support individuals with cognitive impairments by detecting deviations from established routines. In care facilities, for example, it can optimise care delivery and ensure the well-being of residents. In workplaces, for example, it can improve space utilisation and support health and safety initiatives. The ability to monitor individuals unobtrusively and accurately presents a significant opportunity to address pressing societal challenges, particularly in healthcare, elder care, resource management and behaviour analysis. However, such monitoring often encounters significant challenges in preserving privacy and delivering reliable results, especially in high-traffic shared environments where multiple individuals are present.

Traditionally, detection and identification of individuals in shared environments have been achieved through intrusive technologies such as video analytics and Wi-Fi sensing. Video analytics typically involve the use of cameras that capture and process visual data to recognise individuals through facial features, body movement, or other visible characteristics. Although effective, video analytics raise significant privacy concerns, as they capture highly personal and identifiable information. This makes video analytics unsuitable for residential settings or other spaces where individuals are entitled to a reasonable degree of privacy and are likely to reject systems perceived as overly intrusive.

Another approach to detecting and identifying individuals in shared environments is Wi-Fi sensing. This method utilises disturbances in Wi-Fi signals caused by movement within an environment to infer motion and derive characteristics such as stride, cadence, and typical movement patterns. By analysing these signal distortions, Wi-Fi sensing can provide information about individual activity without relying on visual data. However, Wi-Fi sensing still poses privacy concerns, as the inferred data can be used to identify individuals when combined with contextual information such as registered devices or other environmental data. Furthermore, Wi-Fi sensing faces accuracy challenges due to interference from environmental factors, such as walls or neighbouring Wi-Fi signals, and variability in individual homes or buildings.

Existing technologies for individual detection suffer from several critical limitations. Both video analytics and Wi-Fi sensing rely on technologies that are intrusive to varying degrees and are prone to environmental limitations. Video analytics are typically considered too invasive for most applications. Wi-Fi sensing, while less invasive, is vulnerable to accuracy degradation in complex or resource-limited settings. Furthermore, both approaches require significant computational power, advanced infrastructure, and integration with sensitive personal data. This can reduce the likelihood of their widespread adoption.

The difficulty of monitoring individuals in shared spaces is further exacerbated in high-traffic areas, such as kitchens, living rooms, or hallways, where the data generated is noisy and frequently overlaps between multiple individuals. The problem to be solved is therefore accurately attributing activity to specific individuals in shared environments without compromising privacy or requiring intrusive technologies. Further possible solutions, such as wearable devices or user input, demand active participation from individuals. This can be inconvenient, disruptive, and less desirable in many applications.

The present invention tends to address at least the above problems in the known art by providing a novel solution for the anonymised inference of individuals in shared environments through journey detection. The solution uses data from passive, non-intrusive sensors to detect and monitor individual movement, classify activity patterns, and infer journeys without capturing or processing personally identifiable information. By doing so, the present invention tends to ensure privacy while delivering robust and accurate results, even in high-traffic environments.

### SUMMARY

According to the present invention there is provided a method of inferring individual journeys in a shared environment as defined in the appended independent method claim. Further preferable features of the method of the present invention are defined in the appended dependent method claims.

According to a further aspect of the present invention there is provided a system as defined in the appended independent system claim. Further preferable features of the system of the present invention are defined in any appended dependent system claims.

The method of the present invention tends to provide a highly efficient and privacy-preserving approach to monitoring individual movement within shared environments. By relying on data collected from sensors positioned in zones, the method eliminates the need for intrusive technologies such as cameras or wearable devices, ensuring individuals' privacy is maintained. The reliance on binary data (i.e. movement or presence) within zones also reduces the complexity of data processing and eliminates the need for personally identifiable information, making the system more secure and easier to implement in a variety of environments.

The step of determining connections between zones through sequential sensor activations enables the system to infer spatial relationships without requiring a pre-existing map or explicit user input. This adaptability allows the method to be applied in a wide range of shared environments with varying layouts, from residential homes to larger institutional settings. Identifying zones that are directly accessible further refines the system's understanding of the environment, creating a clear framework for analysing movement patterns. The step-by-step approach of starting with raw sensor data, identifying connections between zones, and then determining routes, ensures the system is both accurate and able to handle different sizes and types of environments.

Furthermore, the method introduces a robust mechanism for analysing movement throughout the environment by combining identified connections to determine one or more, or all possible routes. The systematic generation of routes provides a basis for detecting completed journeys, which are then attributed to individuals based on patterns of movement. This enables the system to distinguish between multiple individuals in the same shared environment and to do so even in high-traffic areas where data overlaps are common. By attributing the journeys to individuals, it is possible to perform, for example, behavioural analysis, anomaly detection, and personalised assistance.

The method of the present invention therefore tends to offer a practical, scalable, and privacy-focused solution for inferring individual journeys in shared environments. It uses sensors and sequential data analysis to create a detailed understanding of movement patterns, while addressing growing concerns around privacy in monitoring technologies. Such a combination of efficiency, adaptability, and privacy preservation makes the method well-suited for a variety of applications, such as elder care, home automation, and resource optimisation in shared spaces.

Preferably, the step of collecting data from the at least one sensor concerns collecting information about movement or presence of an individual within a zone over time such that the at least one sensor activation corresponds to a specific time and location to thus create a sequence of events. The association of each activation with both temporal (a specific time) and spatial (a specific location) information tends to enable this step to establish a detailed and structured dataset that captures how and when movement occurs within the shared environment. A granular level of data tends to enable the creation of a sequential timeline of events, which may enable accurate analysis of movement patterns and connections between zones.

Furthermore, a structured approach such as this tends to enable the system to track movement in a way that is both efficient and non-intrusive. In contrast to systems that rely on continuous streams of data, such as video feeds, the use of discrete sensor activations reduces the computational load and the amount of data that needs to be processed. This tends to make the method more resource-efficient, which is particularly beneficial for applications in environments with limited processing power or storage capacity. Additionally, the focus on binary presence data ensures that the system does not rely on identifiable characteristics, thereby preserving privacy and making it suitable for sensitive environments like homes or care facilities.

By collecting data over time, the system tends to gain the ability to analyse trends and recurring patterns in movement. This temporal element is crucial for detecting routines, such as an individual's daily path through an environment, and for identifying anomalies or changes in behaviour. Furthermore, the spatial aspect allows the system to map how individuals transition between different zones, enabling the identification of connections and routes within the shared environment. This dual focus on time and location ensures that the collected data is highly relevant and actionable for subsequent steps in the method.

At least one detected completed journey taken by the individual through the shared environment may preferably be defined as a sequence of zone transitions completed within a certain timeframe. The inclusion of a timeframe ensures that only coherent and meaningful sequences of movement are identified as journeys.

This tends to avoid misinterpretation of random or unrelated sensor activations and thus improve the accuracy and reliability of the analysis.

Analysis of zone transitions also tends to enable the system to capture how individuals navigate the environment, offering insights into movement patterns and routines. Inclusion of a timeframe also advantageously tends to support mapping connections between zones and identifying commonly used routes.

Incorporation of a timeframe may also enable real-time or near-real-time monitoring, making the method suitable for applications such as detecting anomalies or raising alerts for incomplete journeys. A timeframe may also support long-term behavioural analysis, such as identifying delays or changes in routine.

Preferably, each journey is characterised by any combination of features to distinguish individuals, characterised by one or more features selected from the group of features consisting of time of day said journey is taken, speed of movement through said journey, starting and ending zones of said journey, and/or frequency said journey is taken.

These features tend to enable the system to distinguish between individuals based on their unique movement patterns. In turn, this can enable accurate attribution of journeys even in environments with multiple occupants.

The time of day feature may help to capture habitual behaviours, such as recurring morning or evening routines. The speed of movement feature may provide additional detail to distinguish individuals based on their typical pace of movement or gait. Starting and ending zones advantageously further refines the analysis by enabling journeys to be linked to specific locations and journey frequency logs which routes are most regularly taken. Use of these features may create a comprehensive profile of individual behaviour without relying on intrusive technologies.

Advantageously, a machine learning classification algorithm may be trained to recognise habitual patterns in the features associated with journeys. Machine learning may enable the identification of complex patterns and subtle variations in individual behaviour that might not otherwise be apparent. This may enable more accurate attribution of journeys to individuals, particularly in high traffic environments.

Training the algorithm on features such as time of day, speed of movement, starting and ending zones, and journey frequency tends to enable the development of a robust understanding of individual routines. The system may then adapt over time as patterns evolve, thus improving accuracy and reliability.

The use of machine learning tends to also enhance the ability to detect anomalies, for example deviations from usual routines or incomplete journeys. This may be particularly valuable for applications in elder care, safety monitoring, and/or behavioural analysis.

Preferably the machine learning algorithm may be trained using supervised learning such as historical anonymised journeys attributed to individuals, and/or unsupervised learning such as grouping journeys with similar patterns to infer distinct individuals without requiring explicit labelling.

Supervised learning, based on historical anonymised journeys attributed to individuals, tends to enable the use of existing data with known associations to refine accuracy. The use of labelled examples tends to enable the algorithm to better predict and attribute new journeys to individuals based on established patterns.

Unsupervised learning may enable the system to infer distinct individuals by grouping journeys with similar patterns when explicit labelling is unavailable. This approach may be particularly useful in environments where labelled data is limited or impractical to obtain. Clusters of similar journeys may be identified such that the algorithm may automatically infer behavioural differences between individuals.

This may improve the effectiveness of the present invention in dynamic or multi-occupant settings.

The step of attributing the at least one detected completed journey to an individual may be performed based on a probability score assigned to each journey which links said journey to an individual based on how closely the journey matches habitual patterns of said individual. Such an approach may enable the method to handle uncertainty in data, especially in shared environments with overlapping movements or noisy inputs.

The use of a probability score advantageously ensures that the attribution process is not binary but instead takes into account varying degrees of confidence. This tends to increase accuracy because the most likely matches may be prioritised while still allowing for adaptability in cases where journeys do not fully align with expected patterns. Such an approach tends to enable continuous learning and refinement of predictions as more data is processed over time. Furthermore, a reliance on habitual patterns rather than explicit personal identifiers can enable the method to maintain privacy while achieving precise results.

The method of the present invention may further comprise the step of simulating potential journeys through the shared environment by selecting a starting zone, determining possible subsequent routes through the shared environment, and outputting simulated behaviours or recommendations based on the identified routes.

The selection of a starting zone and determining possible subsequent routes may enable the modelling of how individuals are likely to navigate the environment. Such a capability could support a range of applications, for example predicting future movements, planning efficient layouts, or optimising resource usage in shared spaces. Furthermore, the ability to output simulated behaviours or recommendations based on identified routes tends to enhance adaptability and decision-making potential. For example, in elder care or safety monitoring, a simulation may predict deviations from expected behaviours and suggest interventions, such as alerts or reminders. Similarly, in environments such as offices or public spaces, simulations may assist in managing space utilisation, ensuring efficient workflows, or designing layouts that align with common movement patterns.

There may further comprise the step of analysing detected journeys over time to identify patterns of behaviour and thus detect anomalies or deviations from routine journeys.

The aggregation of journey data over time tends to enable the identification of recurring behaviours, such as routine paths and regular times of activity. This may help create a detailed profile of an individual's habits within the shared environment which could support a variety of applications, for example optimising resource allocation and/or monitoring behavioural trends.

Advantageously, the ability to detect anomalies or deviations from routine journeys tends to add a beneficial layer of functionality, for example in scenarios where unexpected behaviours could signal an issue. In elder care settings, deviations from established routines might indicate a potential health concern. Similarly, in security applications, the detection of anomalies may help identify unusual activity patterns that could require attention.

There may further comprise the step of generating an alert or notification when a detected journey is incomplete or deviates from expected behaviour.

This functionality may enable the ability to act proactively rather than passively, which in turn may ensure that significant deviations from routine behaviour are addressed promptly. For example, in elder care settings, an incomplete journey, such as failing to transition from the bedroom to the kitchen at a regular time, may indicate a potential health issue or emergency, triggering an alert to caregivers or family members.

The feature may also support personalised assistance by tailoring alerts to the specific routines and habits of individuals. For example, alerts/reminders can be generated for tasks tied to certain journeys, such as taking medication at a particular time. An alert functionality may make the method more dynamic and responsive which can be particularly valuable in applications that prioritise safety, security, and personal care.

There may further comprise the step of transmitting journey-related data to an external system or device through a communication interface. Such a step may enable integration with a wide range of external platforms and applications. This may allow the extension of capabilities beyond standalone operation, for example integration with systems such as healthcare monitoring platforms, smart home systems, or security networks, or simply with caregivers, family members, or third-party service providers.

Preferably, there further comprises the step of aggregating journey data over an extended period to enable long-term behavioural analysis. The collecting and analysing of data over time tends to support a deeper understanding of individual routines, such as changes in movement patterns, delays in typical journeys, or shifts in commonly used routes. A long-term perspective may be particularly valuable for applications such as health monitoring, where deviations from established behaviours could signal an emerging issue that requires attention.

There may further comprise the step of resolving overlapping journeys by distinguishing between the movements of multiple individuals within the shared environment.

Distinguishing between individuals may be achieved by leveraging features such as habitual patterns, time of day, speed of movement, and starting and ending zones. These features may enable the system to create unique behavioural profiles for each individual, enabling it to accurately separate overlapping journeys without relying on intrusive technologies or personal identifiers. An anonymised approach such as this maintains privacy while effectively managing complex movement data. Furthermore, the step of resolving overlapping journeys by distinguishing between the movements of multiple individuals may enable the ability to correctly attribute journeys to appropriate individuals, even in environments where multiple people are moving simultaneously, or their behaviours intersect.

Advantageously, there further comprises the step of customising monitoring parameters by defining specific journeys of interest; and/or setting thresholds for detecting anomalies in journeys. Such a step may enable tailoring to meet specific needs and preferences.

Allowing users or administrators to define journeys of particular importance may enable the focusing of resources on the most relevant data, for example monitoring an elderly individual's route to the kitchen at specific times of day or monitoring a security-sensitive area in a workplace. The ability to customise tends to enhance the usability and relevance of a method or system for a wide range of applications.

The setting of thresholds for detecting anomalies may add an additional layer of flexibility and control. Different environments may require different levels of sensitivity, for example, in a healthcare setting, tighter thresholds may be used to quickly flag minor deviations in routine, while in less critical scenarios, broader thresholds may reduce unnecessary alerts. The ability to fine-tune anomaly detection can result in the system remaining both responsive and efficient and minimise false alarms.

A system for executing the above disclosed method may comprise at least one sensor positioned in a plurality of zones within a shared environment, the sensor configured to collect data indicating movement or presence of an individual within each zone. A data storage module may be configured to store the collected sensor data and a processor may be configured to analyse activations of the at least one sensor positioned in each of the plurality of zones to determine connections between zones, identify zones that are directly accessible from one another based on the determined connections, combine the identified connections to determine one or more possible routes through the shared environment, detect at least one completed journey taken by the individual through the shared environment by analysing a sequence of sensor activation data, and attribute the at least one detected completed journey to the individual.

Advantageously, the step of identifying one or more or all possible routes through the shared environment may be performed using an Ant Colony Optimisation (ACO) algorithm to determine the most probable or efficient routes based on collected sensor data.

Such a step uses a nature-inspired approach that tends to efficiently solve complex route optimisation problems. The ACO algorithm may mimic the behaviour of ants in finding the shortest or most efficient path, using simulated pheromone trails to prioritise routes based on their likelihood or frequency of use. This is a probabilistic method and may ensure that the system can handle large and complex environments, where multiple potential routes may exist, and identify the most probable or efficient ones based on the collected sensor data.

The use of ACO tends to enhance the accuracy and scalability of the method because it is particularly well-suited for environments with dynamic or overlapping movement patterns. The algorithm enables the ability to adapt to changes in the environment, such as new connections or shifts in movement patterns, by iteratively refining the analysis of possible routes. This may enable robust and effective optimising of route identification and support applications such as behaviour monitoring, anomaly detection, and efficient resource allocation in shared spaces.

Advantageously, power consumption may be reduced by switching at least one sensor into a power-saving mode when no activity is detected within the shared environment. Such a step may minimise energy usage during periods of inactivity without compromising the ability to monitor and collect data when needed. This may be particularly beneficial in environments where prolonged periods of inactivity are common, for example overnight in residential settings or during off-hours in workplaces. Such a step may also extend the operational lifespan of the sensors and reduce maintenance requirements.

There may further comprise the step of increasing data anonymisation by adding noise to or reducing the granularity of sensor data to enhance user privacy. Such a step may enhance user privacy while maintaining the functionality of the system.

The introduction of deliberate imprecision, such as obscuring exact locations or timings, may ensure that individual movements cannot be reconstructed with high accuracy by unintended parties. Such an approach may protect sensitive information without significantly compromising the ability to identify patterns, detect anomalies, or attribute journeys to anonymised individuals.

An additional layer of privacy such as this may be beneficial in environments where protecting user identity is a priority, for example care homes, workplaces, or shared residential settings. Reducing the risk of data misuse or unauthorised access may make the present invention more suitable for privacy-conscious applications while remaining effective in monitoring and analysing individual journeys. A balance between privacy and performance tends to make the present invention both secure and widely applicable in sensitive environments.

There may further comprise the step of storing the collected data to refine the understanding of individual habits. Such a step may enable the building of, and improvement of, behavioural profiles over time. The maintenance of a record of historical movement patterns may enable the identification of recurring habits, the ability to detect subtle changes in behaviour, and the ability to adapt analysis to the evolving behaviours. Continuous refinement tends to enhance the accuracy of journey attribution and anomaly detection and thus ensure remaining effective even as individual routines shift. The use of stored data tends to also support more informed decision-making and personalised interventions.

The data, preferably, remains anonymised such that each individual is represented as abstract entities, by prioritising user privacy while maintaining the system's functionality. By abstracting individuals into non-identifiable entities, the method may eliminate the need to collect or process personally identifiable information. This may reduce the risk of privacy breaches or misuse of sensitive data and is particularly valuable in environments where privacy is a primary concern, such as shared residential spaces, workplaces, or care facilities. Anonymisation of data may also increase compliance with privacy regulations and user expectations, thus making it more acceptable for deployment in sensitive or privacy-conscious settings.

Preferably, the sensors are passive. This may enable non-intrusive and privacy-preserving monitoring of movement within a shared environment. Passive sensors, such as motion detectors or contact sensors, do not emit signals or collect detailed personal data. Thus, privacy can be ensured, while movement or presence can still be detected effectively. Passive sensors tend to also be energy-efficient, cost-effective, and require minimal maintenance, making them well-suited for sensitive or multi-occupancy environments like residential homes or care facilities.

Advantageously, each zone represents a room or zone within a room. Defining each zone as either a room or a specific area within a room tends to provide flexibility and precision in monitoring movement within a shared environment. Such an approach may enable adaption to various layouts, from multi-room homes to single large spaces divided into functional zones.

The system may further comprise a communication module configured to receive the sensor data from the at least one sensor and transmit instructions or insights based on the detected journeys.

Including a communication module configured to receive sensor data and transmit instructions or insights based on detected journeys tends to enhance the functionality of the system by enabling real-time interaction and integration with external devices or systems. Actionable outputs may be produced, such as alerts, recommendations, or automated actions, based on journey data, thus improving adaptability and usefulness in various applications.

### BRIEF DESCRIPTION OF THE FIGURES

Aspects of the present disclosure will now be described by way of example with reference to the accompanying figures. In the figures:
Figure 1 shows a data processing workflow for identifying and assigning journeys to individuals in a shared environment according to the present invention, consisting of sequential stages, with databases on the left representing different types of data storage and corresponding analytical processes on the right;
Figure 2 is flowchart of a step-by-step process according to the present invention, for analysing sensor data to determine room connections and identify routes through a shared environment;
Figure 3 is a flowchart representing a process according to the present invention for real-time or near-real-time journey detection and attribution in a shared environment showing the stages from sensor data collection to journey assignment for individuals; and
Figure 4 is a flowchart outlining a process according to the present invention for simulating potential journeys through a shared environment.

### DETAILED DESCRIPTION

The present invention relates to a method and system for inferring individual journeys within a shared environment using data collected from passive sensors. The invention addresses the challenge of monitoring individuals in multi-occupancy settings while preserving privacy and avoiding intrusive technologies.

By using sequential sensor activations, the method identifies connections between zones 15, determines all possible routes 20 through the environment, detects completed journeys, and attributes them to specific individuals based on habitual patterns. The system processes data in an anonymised manner, ensuring that individuals are represented as abstract entities, thereby maintaining privacy.

The invention may employ advanced analytical techniques, such as Ant Colony Optimisation (ACO) for determining routes and evolutionary algorithms 28 for assigning journeys to individuals. It is capable of adapting to dynamic environments, identifying behavioural patterns over time, and detecting anomalies in movement.

Additionally, the invention supports predictive simulations of potential journeys, allowing the system to anticipate future behaviours and provide actionable insights. This combination of privacy preservation, accuracy, and scalability makes the invention particularly suitable for applications such as elder care, behavioural analysis, anomaly detection, and smart home management in shared or multi-occupancy environments.

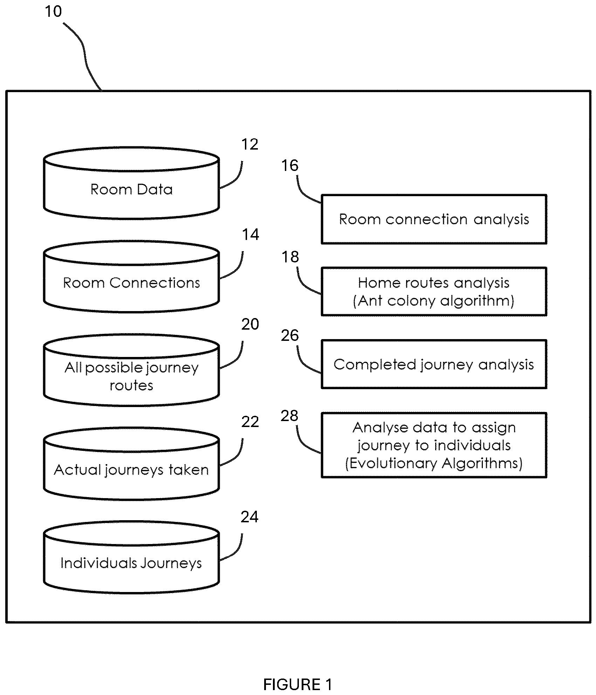

Referring firstly to Figure 1, a data processing workflow 10 for identifying and assigning journeys to individuals in a shared environment is shown. It comprises sequential stages, with the components on the left representing different types of data storage and those on the right representing corresponding analytical processes.

The first component, room data 12, contains raw data collected from sensors positioned in various zones 15 or rooms. This data indicates movement or presence within each zone. From this raw data, room connections 14 are derived, representing the relationships between rooms or zones 15 based on the analysis of sequential sensor activations. Using these connections, all possible journey routes 20 are identified and stored, representing all potential paths through the environment. Actual journeys taken 22 refer to the completed journeys detected based on the analysis of sensor activation sequences and inferred route patterns.

Finally, individuals' journeys 24 represent the assignment of these detected journeys to specific individuals, while maintaining their anonymity.

The analytical processes are designed to extract meaningful insights from the collected data. Room connection analysis 16 processes the raw room data 12 to identify which zones 15 are connected based on movement patterns. Home routes analysis 18 employs an Ant Colony Optimisation (ACO) algorithm to determine all possible routes 20 between connected zones, using probabilistic techniques to simulate efficient route discovery. Completed journey analysis 26 evaluates movement data to identify which of the potential routes were actually taken, refining the system's understanding of real-world patterns. Lastly, the data is analysed using evolutionary algorithms 28 to assign completed journeys to specific individuals based on unique movement patterns and habits.

Overall, this system provides a comprehensive framework for tracking, analysing, and assigning individual journeys in a shared environment.

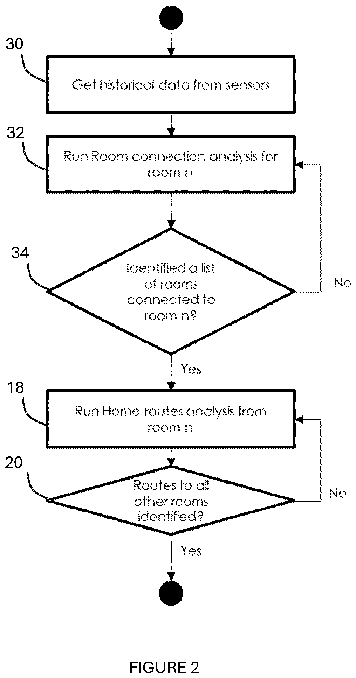

Figure 2 illustrates an embodiment of the invention in which the layout of a monitored environment is determined, such as a house, and how all possible routes 20 through it are deduced. The process requires collecting and analysing historical data 30 from motion sensors, determining connections 32 for a specific room (or zone 15) of interest referred to as "room n," and identifying routes 34 through an iterative flow that ensures all monitored areas are fully mapped. Each room in the environment is treated as "room n" during its respective iteration, and the process is repeated for every monitored room to create a comprehensive representation of the environment's layout and possible movement paths.

The process begins with the retrieval of historical data from motion sensors 30, referred to as "Node Data." This data captures information about sensor activations, including the time and location of movement within the environment. It provides the foundation for understanding how individuals transition between different monitored areas. For the specific room of interest, "room n", the system performs a room connection analysis 16 to identify which other rooms or zones 15 are directly connected to it. This involves examining sequential sensor activations to detect adjacency relationships. For instance, if motion is consistently detected in one room shortly after being detected in room n, the system infers that these rooms are connected.

Once the room connection analysis 16 is complete for room n, a decision point determines whether a list of connected rooms has been successfully identified. If connections for room n have been established, the process moves forward to the next stage, which involves running a home routes analysis 18. However, if the system cannot identify connections for room n, additional data may need to be processed, or the connection analysis may need to be revisited to refine the results.

The home routes analysis 18 uses the identified connections for room n to determine all possible routes 20 leading from room n to other rooms in the environment. This step uses computational algorithms, such as Ant Colony Optimisation (ACO), which are particularly effective for route mapping. ACO is inspired by the behaviour of ants, which use pheromone trails to find efficient paths to food sources. In this context, the algorithm evaluates transitions between connected rooms and identifies all potential movement paths from room n to other rooms, ensuring a thorough and probabilistic analysis.

Another decision point follows this analysis to check whether the system has identified all possible routes 20 from room n to other rooms. If all routes have been determined, the process concludes for room n, and the system moves on to the next room of interest, treating it as the new room n. If not, additional iterations or refinement may be required to complete the route identification for the current room.

The underlying node connections algorithm plays a critical role in determining connections between room n and other rooms or zones 15. This algorithm begins by ingesting the motion sensor data, which is then cleaned and filtered to include only relevant entries. The filtering process accounts for the selected environment, date, and sensor type, ensuring that only meaningful data is used in the analysis. The cleaned data is stored in a structured format, such as a DataFrame.

During the analysis, the data rows are iterated to identify patterns of movement between nodes (rooms or zones 15). For each activation recorded as "True" by the sensors, key information such as the current node (room n), next node, time of activation, and entry time for the subsequent node is extracted and stored in a new DataFrame. This iterative process builds a detailed dataset that captures movement transitions between room n and other rooms in the environment.

For each unique node, including room n, the system counts all subsequent activations in other nodes. These counts are used to calculate a prediction score for each connection, which is determined by dividing the number of transitions to a specific node by the total number of transitions observed for that day. The prediction score quantifies the likelihood of movement between room n and other nodes, providing a statistical basis for identifying connections and informing the route analysis.

The purpose of this process is to enable the system to fully understand the layout of the monitored environment by identifying connections between room n and other rooms and determining all possible routes 20. The iterative approach ensures that no room or zone 15 is overlooked, making the system adaptable to environments with varying layouts and complexities. The resulting route data forms the foundation for further analysis, such as detecting completed journeys 26, assigning them to individuals, or monitoring behavioural patterns over time.

By combining historical sensor data 30, advanced algorithms, and predictive scoring, the system achieves a high level of precision and reliability in mapping connections and routes for room n and every other monitored room. This capability is particularly valuable in applications such as home automation, elder care, resource optimisation, and behavioural analysis, where understanding movement patterns is essential. The process balances accuracy, scalability, and adaptability, making it suitable for a wide range of environments and use cases.

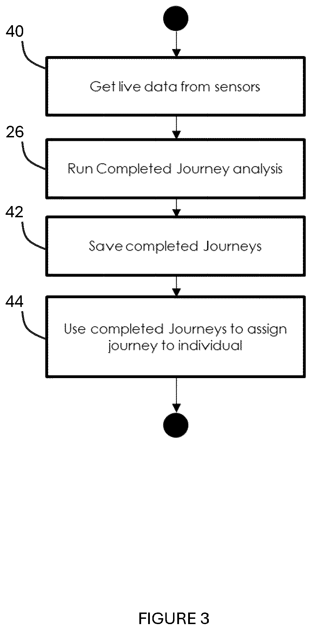

Referring now to Figure 3, this demonstrates how the system operates in real-time or near-real-time to detect movement patterns, attribute journeys, and develop behavioural routines.

The process begins by gathering live data from sensors 40 within the environment over a specified period, such as the past few hours. The sensors collect data indicating movement or presence within different zones 15, forming a sequential record of activity. This data serves as the input for the next stage, the completed journey analysis 26. The completed journey analysis 26 algorithm processes this data to detect all completed journeys within the environment. For example, it identifies sequences of movement such as a journey from bedroom 1 to the kitchen in a home. The analysis uses a known starting space for each individual (e.g., bedroom) and incorporates information about possible journey routes from each room. By applying a weighting system based on probability, the algorithm filters the data to emphasise commonly used routes by individuals within the home, ensuring accurate detection of meaningful journeys.

The detected completed journeys are then stored 42 as results for further use. The next step involves analysing the speed of journey completion and the time of day to establish a routine for when specific journeys are typically completed by individuals. These routines are stored in a database called "individuals Journey 24", enabling the system to build a comprehensive behavioural profile for each individual in the environment.

To refine the process further, in the final step 44, new node data is collected and analysed against the previously identified routes in order to use the completed journeys to assign a journey to an individual. The analysis applies a weighting system using ACO to filter and prioritise commonly used routes by individuals in the environment. This refined analysis contributes to the ongoing improvement of the journey detection process, making it more accurate and adaptive to the specific environment.

The final step 44 again considers the speed of journey completion and time of day to update and expand the behavioural routines stored in "individuals Journey 24". By continuously refining these routines with live and historical data, the system develops a robust understanding of individual habits and patterns.

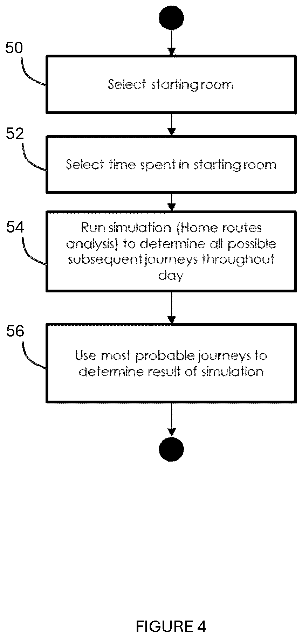

Referring now to Figure 4, this illustrates a process for simulating potential behaviours and journeys within a shared environment. The simulation is designed to model possible movement patterns based on predefined inputs, allowing for insights into individual habits and opportunities to suggest new routines that could improve health or optimise daily activities.

The simulation begins with the selection of a starting room 50, which serves as the initial location for a simulated journey or behaviour. This input defines where the simulation starts, mirroring the real-world starting point for an individual's movement. Along with the starting room, the time spent in that room 52 is also specified, providing a temporal parameter that reflects the typical or desired duration of occupancy in that room (or zone). These inputs establish the foundation for simulating subsequent actions.

Using these initial conditions, the system runs a simulation 54 powered by the home routes analysis 18 algorithm. This algorithm processes historical and environmental data to identify all possible subsequent journeys 20 from the starting room. It determines potential routes and transitions, incorporating information about the environment's layout, connections between rooms, and previously observed patterns of movement. The simulation 54 also factors in time spent in subsequent rooms, enabling the generation of realistic and comprehensive movement sequences throughout the day.

Once the simulation 54 is complete, the system analyses the most probable journeys 56 from the generated possibilities. These journeys are identified based on their likelihood, which is derived from historical patterns, known connections, and probabilistic models such as ACO. The simulation delivers meaningful insights while filtering out less relevant or unlikely scenarios because it focuses on the most probable journeys. The results of the simulation can then be used to suggest new patterns of living, such as optimised routines for health improvements, better resource allocation, or enhanced time management.

This simulation process 54 provides a powerful tool for understanding and predicting movement patterns in shared environments. The system can adapt to individual needs and generate actionable recommendations as it allows users or administrators to define starting conditions and simulate future behaviours. The integration of historical data, advanced algorithms, and probabilistic modelling ensures that the simulation is both accurate and flexible. It offers a proactive approach to improving individual well-being and optimising shared spaces through informed and personalised suggestions.

In an embodiment of the invention, the shared environment is an office area, and the method and system are used to understand how employees transition through key working areas throughout the day. This information can then be used to more effectively heat or cool a building depending on, for example, occupancy. The shared environment could also be a shop floor, and the method and system used to analyse footfall, for example, understand how customers flow through a shopfloor or determine what could be done to impact the customer journey and divert said customers to different shop areas.

## Claims

1. A method of inferring individual journeys in a shared environment, the method comprising the steps of:
collecting data from at least one sensor positioned in each of a plurality of zones within the shared environment, wherein the data indicates movement or presence of an individual within each zone;
determining connections between zones by analysing activations of the at least one sensor positioned in each of the plurality of zones;
identifying zones that are directly accessible from one another based on the determined connections;
combining the identified connections to determine one or more possible routes through the shared environment;
analysing a sequence of sensor activation data indicating movement or presence of an individual within the zones to detect at least one completed journey taken by the individual through the shared environment; and
attributing the at least one detected completed journey to the individual.

2. The method according to claim 1, wherein the step of collecting data from the at least one sensor concerns collecting information about movement or presence of the individual within a zone over time such that the at least one sensor activation corresponds to a specific time and location to thus create a sequence of events.

3. The method according to claim 1 or claim 2, wherein the at least one detected completed journey taken through the environment is defined as a sequence of zone transitions completed within a certain timeframe.

4. The method according to any of the preceding claims, wherein each journey is **characterised by** any combination of features to distinguish individuals, **characterised by** one or more features selected from the group of features consisting of;
time of day said journey is taken,
speed of movement through said journey,
starting and ending zones of said journey, and/or
frequency said journey is taken.

5. The method according to claim 4, wherein a machine learning classification algorithm is trained to recognise habitual patterns in the features associated with journeys.

6. The method according to claim 5, wherein the machine learning algorithm is trained using:
supervised learning such as historical anonymised journeys attributed to individuals; and/or
unsupervised learning such as grouping journeys with similar patterns to infer distinct individuals without requiring explicit labelling.

7. The method according to any of the preceding claims, wherein the step of attributing the at least one detected completed journey to an individual is performed based on a probability score assigned to each journey which links said journey to an individual based on how closely the journey matches habitual patterns of said individual.

8. The method according to any of the preceding claims, further comprising the step of simulating potential journeys through the shared environment by:
selecting a starting zone;
determining possible subsequent routes through the shared environment; and
outputting simulated behaviours or recommendations based on the identified routes.

9. The method according to any of the preceding claims, further comprising:
analysing detected journeys over time to identify patterns of behaviour; and
detecting anomalies or deviations from routine journeys.

10. The method according to any of the preceding claims, further comprising generating an alert or notification when a detected journey is incomplete or deviates from expected behaviour.

11. The method according to any of the preceding claims, further comprising transmitting journey-related data to an external system or device through a communication interface.

12. The method according to any of the preceding claims, further comprising aggregating journey data over an extended period to enable long-term behavioural analysis.

13. The method according to any of the preceding claims, further comprising resolving overlapping journeys by distinguishing between the movements of multiple individuals within the shared environment.

14. The method according to any of the preceding claims, further comprising customising monitoring parameters by:
defining specific journeys of interest; and/or
setting thresholds for detecting anomalies in journeys.

15. A system for inferring individual journeys in a shared environment, the system comprising:
at least one sensor positioned in each of a plurality of zones within the shared environment, the sensor configured to collect data indicating movement or presence of an individual within each zone;
a data storage module configured to store the collected sensor data; and
a processor configured to:
analyse activations of the at least one sensor positioned in each of the plurality of zones to determine connections between zones;
identify zones that are directly accessible from one another based on the determined connections;
combine the identified connections to determine one or more possible routes through the shared environment;
detect at least one completed journey taken by the individual through the shared environment by analysing a sequence of sensor activation data; and
attribute the at least one detected completed journey to the individual.
